Europäisches Patentamt

European Patent Office

Office européen des brevets

(11) Veröffentlichungsnummer: **0 118 006 B1**

(12) **EUROPÄISCHE PATENTSCHRIFT**

(45) Veröffentlichungstag der Patentschrift:
04.06.86

(21) Anmeldenummer: **84100805.5**

(22) Anmeldetag: **26.01.84**

(51) Int. Cl.⁴: **F 16 B 13/08**

(54) Schlaganker.

(30) Priorität: **03.02.83 DE 3303602**

(43) Veröffentlichungstag der Anmeldung:
**12.09.84 Patentblatt 84/37**

(45) Bekanntmachung des Hinweises auf die Patenterteilung:
**04.06.86 Patentblatt 86/23**

(84) Benannte Vertragsstaaten:
**AT CH DE FR GB IT LI SE**

(56) Entgegenhaltungen:
**DE - A - 2 617 191**
**US - A - 1 795 057**
**US - A - 2 787 931**
**US - A - 3 200 693**

(73) Patentinhaber: **Upat GmbH & Co, Freiburger
Strasse 9 Postfach 1320, D-7830 Emmendingen (DE)**

(72) Erfinder: **Kistner, Herbert, Am Mühlbach 10,
D-7800 Freiburg-Betzenhausen (DE)**
Erfinder: **Frischmann, Albert, Hürnheimweg 3,
D-7832 Kenzingen (DE)**

�titleVertreter: **Rackette, Karl, Dipl.-Phys. Dr.-Ing,
Kaiser-Joseph-Strasse 179 Postfach 1310,
D-7800 Freiburg (DE)**

ACTORUM AG

## Beschreibung

Die Erfindung betrifft einen Schlaganker mit einer über einen über einen Teil ihrer Länge geschlitzten Metallhülse, deren Bohrung sich im Bereich des geschlitzten Hülsenteils gegen das vordere Ende hin verjüngt, und mit einem radial verformbaren, eine Axialbohrung aufweisenden Spreizkörper.

Ein derartiger Schlaganker ist in der DE-A-26 17 191 beschrieben und soll bei konstantem Spreizweg des Spreizkörpers im wesentlichen konstante Spreizdruckverhältnisse im Spreizbereich bewirken. Dazu wird der Spreizkörper mit Hilfe eines Einschlagwerkzeuges nach dem Verfahren der wegkonstanten Spreizung eingeschlagen.

Die im wesentlichen konstanten Spreizdruckverhältnisse sollen durch sich über die gesamte Länge des Spreizkörpers erstreckende Ausnehmungen bzw. über Schlitze in einem hülsenförmig ausgebildeten Spreizkörper erreicht werden. Bei einer geschlitzten Hülse bewirkt aber bereits ein radialer Druck auf ein Ende eine Verengung des Schlitzes und somit eine Verformung der gesamten Hülse. Aus diesem Grunde können mit dem bekannten Spreizkörper konstante Spreizdruckverhältnisse nur innerhalb eines verhältnismässig engen Toleranzbereiches erreicht werden.

Der Erfindung liegt die Aufgabe zugrunde, einen Schlaganker der eingangs genannten Art so zu verbessern, dass konstante Spreizdruckverhältnisse bei konstantem Spreizweg innerhalb eines grossen Toleranzbereiches bezüglich der Festigkeit des Befestigungsgrundes, der Massabweichungen des Schlagankers infolge von Fabrikationstoleranzen und der Bohrlochdurchmesserabweichungen gewährleistet sind.

Diese Aufgabe wird erfindungsgemäss dadurch gelöst, dass der Spreizkörper napfförmig mit einer Bodenplatte ausgebildet ist, wobei die Mantelfläche schlitzfrei geschlossen ist.

Die Form des Spreizkörpers gestattet eine einfache Herstellung und bewirkt eine über die axiale Länge ungleiche Verformbarkeit. Im Bereich der Bodenplatte wird durch diese die radiale Verformbarkeit reduziert, während das offene Ende der Spreizhülse abschnittsweise verformbar ist. Dabei ergibt sich, dass bei gleichbleibender Eintreibkraft der Spreizdruck des umgeformten Spreizkörpers ab einem bestimmten Zeitpunkt (halbe Verformung) annähernd gleich ist und nicht mehr wesentlichen ansteigt.

Um eine möglichst ungleichmässige Verformbarkeit in axialer Richtung zu erzielen, ist es zweckmässig, wenn die Bodenplatte ganz geschlossen und dadurch besonders unverformbar ist. Je nach der Stärke der Bodenplatte kann diese aber auch teilweise durchbrochen sein, wobei die Art und Weise sowie die Grösse des Durchbruches das Verhältnis der Verformbarkeiten am vorderen und hinteren Ende der Spreizhülse bestimmt.

In der Zeichnung ist ein Ausführungsbeispiel der Erfindung dargestellt. Es zeigen:

Fig. 1 den erfindungsgemässen Schlaganker im ungespreizten Zustand im Längsschnitt,

Fig. 2 den Spreizkörper des Schlagankers gemäss Fig. 1 in einer vergrösserten Darstellung im Halbschnitt,

Fig. 3 den Schlaganker gemäss Fig. 1 zusammen mit einem Einschlagwerkzeug während des Eintreibvorgangs des Spreizkörpers in einer Seitenansicht, teilweise im Schnitt,

Fig. 4 den Spreizkörper gemäss Fig. 3 in einer vergrösserten Darstellung im Halbschnitt,

Fig. 5 den Schlaganker in einer der Fig. 3 entsprechenden Darstellung nach vollständigem Eintreiben des Spreizkörpers und

Fig. 6 den Spreizkörper in vergrösserter Darstellung im Halbschnitt nach Beendigung des Eintreibvorgangs.

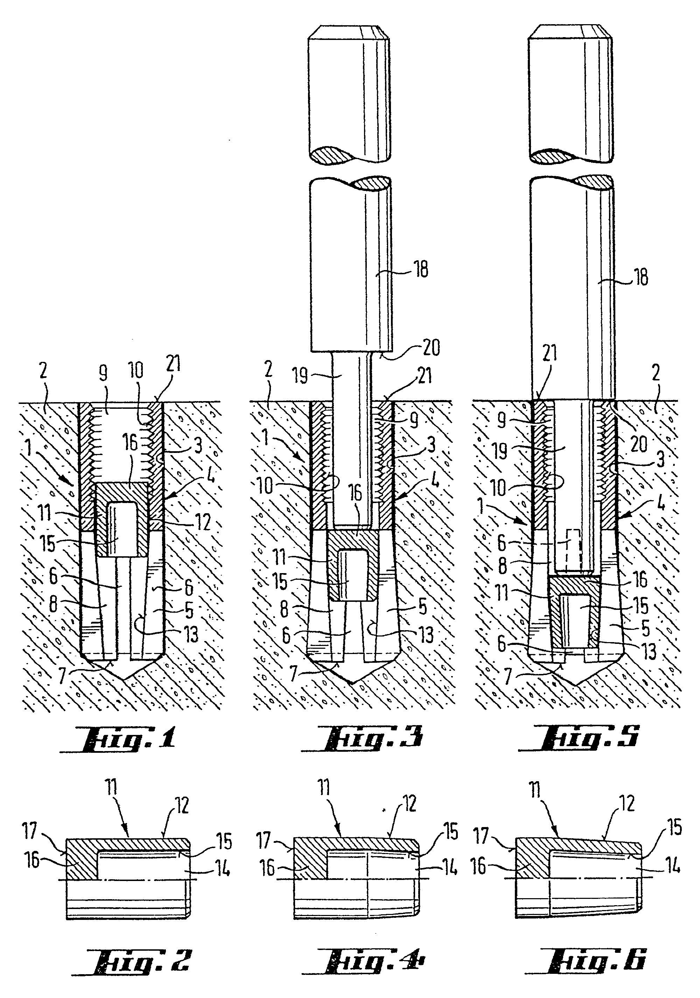

In Fig. 1 ist der Schlaganker 1 im ungespreizten Zustand nach dem Einschieben in ein in einem Befestigungsgrund 2 geschaffenes Bohrloch 3 dargestellt. Der Schlaganker 1 verfügt über eine Hülse 4, die im vorderen Abschnitt 5 mit Längsschlitzen 6 und mit einer sich zum vorderen Ende 7 hin verjüngenden Bohrung 8 versehen ist. Im hinteren Abschnitt 9 ist in der Hülse 4 ein Innengewinde 10 ausgebildet.

In die sich zum vorderen Ende verjüngende Bohrung 8 ist ein Spreizkörper 11 so weit eingeschoben, dass er mit seiner zylindrischen Mantelfläche 12 gegen den Innenkonus 13 der Bohrung 8 anliegt.

Fig. 2 zeigt in vergrösserter Darstellung und im Halbschnitt den Spreizkörper 11, der im wesentlichen napfförmig als geschlossener Hohlzylinder ausgebildet ist. In den Spreizkörper 11 erstreckt sich ausgehend vom vorderen Ende 14 eine Axialbohrung 15 bis zu einer Bodenplatte 16. Durch diese Ausbildung ist der Spreizkörper in der Nähe des vorderen Endes 14 im Gegensatz zum durch die Bodenplatte 16 verstärkten hinteren Ende 17 leicht radial verformbar.

In den Figuren 3 und 4 ist der teilweise eingetriebene und verformte Spreizkörper 11 dargestellt. Das zum Eintreiben verwendete Einschlagwerkzeug 18 drückt mit seinem Dorn 19 gegen die Bodenplatte 16 des Spreizkörpers 11, der über seine zylindrische Mantelfläche 12 auf den mit Längsschlitzen 6 versehenen vorderen Bereich 5 der Hülse 4 eine Spreizkraft ausübt, so dass der vordere Abschnitt 5 der Hülse 4 fest gegen die Wandung des Bohrloches 3 angedrückt wird.

Wie man in den Figuren 3 und 4 erkennt, hat sich der Spreizkörper 11 bis etwa zur Hälfte seiner axialen Länge verformt und der Konizität in der Bohrung 8 angepasst.

Durch weiteres Eintreiben des Spreizkörpers 11 kommt ein Bund 20 des Einschlagwerkzeuges 18 auf dem hinteren Ende 21 der Hülse 4 zur Auflage. Hierdurch soll für den Verwender die Sicherheit gegeben werden, dass der Schlaganker 1 im vorgesehenen Mass aufgespreizt worden ist (wegkontrollierter Schlaganker).

Die Figuren 5 und 6 zeigen, wie sich der Spreizkörper 11 im Vergleich zu den Figuren 3 und 4 weiter verformt hat. Dabei ist der Spreizdruck des umgeformten Spreizkörpers 11 ab einem etwa der halben Verformung zugeordneten bestimmten Zeitpunkt annähernd gleich geblieben und nicht mehr gestiegen. Die Grösse des Spreizdruckes ist dabei unabhängig vom Zusammentreffen ungünstiger Fabrikationstoleranzen des Schlagankers 1, Bohrlochdurchmessertoleranzen sowie Veränderungen in der Nachgiebigkeit des Befestigungsgrundes 2. Auf diese Weise werden für den Schlaganker 1 immer optimale Verankerungswerte erreicht, ohne den Befestigungsgrund 2 durch den zur reibungschüssigen Verankerung notwendigen Spreizdruck zu überlasten.

### Patentansprüche

1. Schlaganker (1) mit einer über einen Teil ihrer Länge geschlitzten Metallhülse (4), deren Bohrung (8) sich im Bereich des geschlitzten Hülsenteils gegen das vordere Ende (7) hin verjüngt, und mit einem radial verformbaren, eine Axialbohrung (15) aufweisenden Spreizkörper (11), dadurch gekennzeichnet, dass der Spreizkörper (11) napfförmig mit einer Bodenplatte (16) ausgebildet ist, wobei die Mantelfläche (12) schlitzfrei geschlossen ist.

2. Schlaganker nach Anspruch 1, dadurch gekennzeichnet, dass die Bodenplatte (16) ganz geschlossen ist.

3. Schlaganker nach Anspruch 1, dadurch gekennzeichnet, dass die Bodenplatte (16) teilweise durchbrochen ist.

### Claims

1. An impact-anchor (1) having a metal socket (4) which is slit over part of its length and the bore (8) of which in the region of the slit pat of the socket tapers in towards the front end (7), and having a radially deformable spreader body (11) which exhibits an axial bore (15), characterized in that the spreader body (11) is made cup-shaped with an endplate (16), the surface (12) being complete without slitting.

2. An impact-anchor as in Claim 1, characterized in that the endplate (16) is quite solid.

3. An impact-anchor as in Claim 1, characterized in that the endplate (16) is partially pierced.

### Revendications

1. Cheville à percussion (1) avec une gaine métallique (4) fendue sur une partie de sa longueur, dont l'alésage (8) s'amincit vers l'extrémité antérieure (7) dans la zone de la partie fendue de la gaine, et avec un corps extensible (11) radialement déformable présentant un alésage axial (15), caractérisée en ce que le corps extensible (11) est constitué en forme de cuvette avec une plaque de base (16), la surface de l'enveloppe (12) étant fermée sans présenter de fente.

2. Cheville à percussion selon la revendication 1, caractérisée en ce que la plaque de base (16) est complètement fermée.

3. Cheville à percussion selon la revendication 1, caractérisée en ce que la plaque de base (16) est partiellement perforée.

**Fig. 1**

**Fig. 3**

**Fig. 5**

**Fig. 2**

**Fig. 4**

**Fig. 6**